# EUROPÄISCHE PATENTSCHRIFT

(11) **EP 1 791 705 B1**
(45) Veröffentlichungstag und Bekanntmachung des Hinweises auf die Patenterteilung: **06.06.2012**
(21) Anmeldenummer: 05775889.8
(22) Anmeldetag: 30.08.2005
(51) Int. Cl.: B60G 17/015, B60G 17/048, F16F 9/092

(54) **FEDER-DÄMPFER-EINRICHTUNG FÜR KRAFTFAHRZEUGE UND NIVEAUREGULIERUNGSSYSTEM FÜR KRAFTFAHRZEUGE**
SPRING-DAMPER DEVICE FOR MOTOR VEHICLES, AND LEVEL-REGULATING SYSTEM FOR MOTOR VEHICLES
DISPOSITIF D'AMORTISSEMENT POUR VEHICULE AUTOMOBILE, ET SYSTEME DE REGULATION DE NIVEAU POUR VEHICULE AUTOMOBILE

(30) Priorität: 03.09.2004 DE 102004042711
(43) Veröffentlichungstag der Anmeldung: 06.06.2007
(73) Patentinhaber: GM Global Technology Operations LLC, Detroit, MI 48265-3000 (US)
(72) Erfinder: SIEBENEICK, Jürgen, 55430 Oberwesel (DE)
(74) Vertreter: Gebauer, Dieter Edmund
(86) Internationale Anmeldenummer: PCT/EP2005/009306
(87) Internationale Veröffentlichungsnummer: WO 2006/027141

(56) Entgegenhaltungen:
- EP-A- 1 226 987
- US-A- 3 627 348
- US-A- 4 821 191
- US-A1- 2001 033 047

## Beschreibung

Die Erfindung betrifft eine Feder-Dämpfer-Einrichtung für ein Kraftfahrzeug, mit einem Haupthydraulikvolumen und mit einem gegenüber dem Haupthydraulikvolumen abgetrennten, mit dem Haupthydraulikvolumen zusammenwirkenden Pneumatikvolumen. Des weiteren betrifft die Erfindung ein Niveauregulierungssystem für ein Kraftfahrzeug, mit mehreren derartigen hydropneumatischen Feder-Dämpfer-Einrichtungen.

Zur Verbesserung des Fahrkomforts wurden in der Vergangenheit Fahrwerke von Kraftfahrzeugen zunehmend weiterentwickelt. So sind aus dem Stand der Technik aktive Fahrwerke bekannt. Bei solchen aktiven Fahrwerken werden Fahrwerksysteme automatisch über einen Regelkreis an die jeweiligen Fahrbedingungen angepasst. Bei den mithilfe eines aktiven Fahrwerks anpassbaren Fahrzeugsystemen handelt es sich zum Beispiel um Feder-Dämpfer-Systeme, Niveauregulierungssysteme und/oder Stabilisierungssysteme des Fahrwerks.

Aus dem Stand der Technik sind verschiedene Feder-Dämpfer-Einrichtungen und Niveauregulierungssysteme bekannt. So zeigt zum Beispiel die DE 36 19 777 A1 eine Niveauregeleinrichtung für Kraftfahrzeuge, die mehrere Hydraulikzylinder umfasst, wobei die Hydraulikzylinder untereinander sowie mit einem zentralen Tank über Hydraulikleitungen verbunden sind.

Die EP 0 686 518 B1 offenbart ein pneumatisches Niveauregelungssystem mit Luftfederungselementen, die über Pneumatikleitungen untereinander sowie mit einem zentralen Kompressor verbunden sind,

Die gattungsbildende US-Patentanmeldung 2001/033047 A1 und das US-Patent 3627348 A offenbaren jeweils eine Feder-Dämpfer-Einrichtung mit einem Haupthydraulikvolumen, mit einem gegenüber dem Haupthydraulikvolumen abgetrennten, mit dem Haupthydraulikvolumen zusammenwirkenden Pneumatikvolumen und einem dezentralen Ausgleichshydraulikvolumen.

Hiervon ausgehend liegt der vorliegenden Erfindung das Problem zu Grunde, eine neuartige Feder-Dämpfer-Einrichtung sowie ein neuartiges Niveauregulierungssystem für ein Kraftfahrzeug zu schaffen.

Das erfindungsgemäße Niveauregulierungssystem ist durch die Merkmale des Patentanspruchs 1 gekennzeichnet.

Das erfindungsgemäße Niveauregulierungssystem verfügt über mehrere hydropneumatische Feder-Dämpfer-Einrichtungen, wobei jedem Rad des Kraftfahrzeugs eine hydropneumatische Feder-Dämpfer-Einrichtung zugeordnet ist. Jede Feder-Dämpfer-Einrichtung weist dezentral ein Haupthydraulikvolumen, ein Ausgleichshydraulikvolumen und ein Pneumatikvolumen auf. Das Ausgleichshydraulikvolumen einer Feder-Dämpfer-Einrichtung steht mit dem Haupthydraulikvolumen dieser Feder-Dämpfer-Einrichtung in Verbindung. Hydraulikflüssigkeit ist vom Ausgleichshydraulikvolumen in das Haupthydraulikvolumen und umgekehrt zur Bereitstellung einer Höhenänderung bzw. Niveauänderung für das Kraftfahrzeug umleitbar.

Das erfindungsgemäße Niveauregulierungssystem weist eine zentrale Steuer- bzw. Regeleinrichtung auf, wobei alle Feder-Dämpfer-Einrichtungen und den Feder-Dämpfer-Einrichtungen zugeordnete Höhensensoren mit der zentralen Steuer- bzw. Regeleinrichtung über Steuerleitungen verbunden sind.

Bevorzugte Weiterbildungen der Erfindung ergeben sich aus den abhängigen Unteransprüchen und der nachfolgenden Beschreibung.

Nachfolgend wird ein Ausführungsbeispiel der Erfindung, ohne hierauf beschränkt zu sein, unter Bezugnahme auf die Zeichnung näher erläutert. In der Zeichnung zeigt:
- Fig. 1: ein schematisiertes Blockschaltbild einer erfindungsgemäßen Feder-Dämpfer-Einrichtung,
- Fig. 2: ein schematisiertes Blockschaltbild eines erfindungsgemäßen Niveauregulierungssystems mit mehreren erfindungsgemäßen Feder-Dämpfer-Einrichtungen gemäß Fig. 1, und
- Fig. 3: ein schematisches Blockschaltbild einer erfindungsgemäßen Feder-Dämpfer-Einrichtung, die gegenüber der Ausführungsform nach der Fig. 1 modifiziert ist.

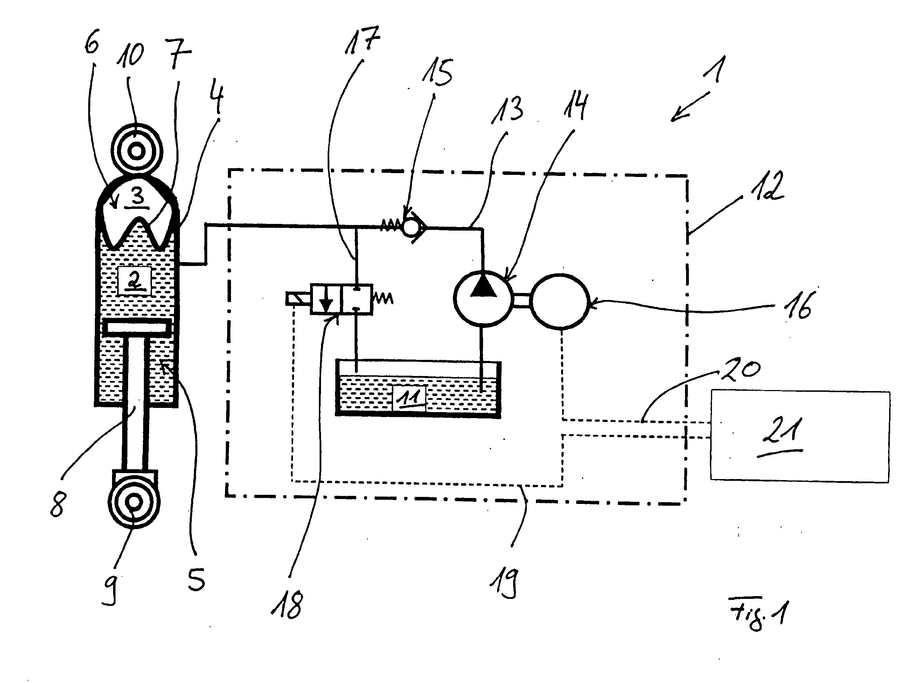

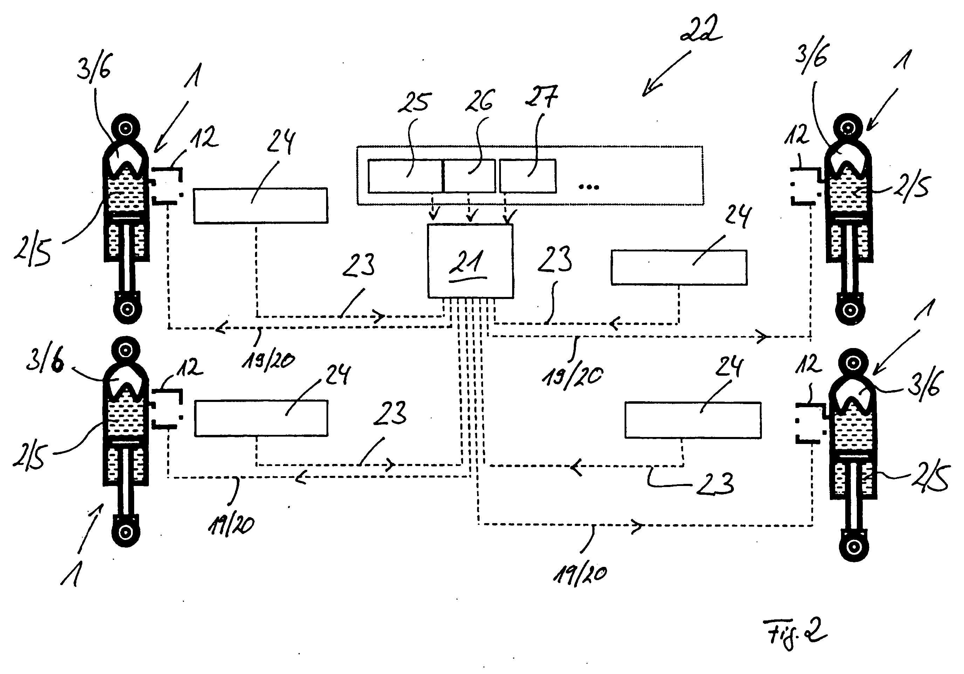

Nachfolgend wird die Erfindung unter Bezugnahme auf Fig. 1 und 2 in größerem Detail beschrieben.

Fig. 1 zeigt eine Feder-Dämpfer-Einrichtung 1, wobei eine derartige Feder-Dämpfer-Einrichtung 1 dezentral jedem Rad eines Kraftfahrzeugs zugeordnet sein kann. Fig. 1 ist eine stark schematisierte Darstellung der erfindungsgemäßen Feder-Dämpfer-Einrichtung 1 in Form eines Blockschaltbilds.

So verfügt gemäß Fig. 1 die Feder-Dämpfer-Einrichtung 1 über ein Haupthydraulikvolumen 2 und ein gegenüber dem Haupthydraulikvolumen 2 abgetrenntes, mit dem Haupthydraulikvolumen 2 zusammenwirkendes Pneumatikvolumen 3. Das Haupthydraulikvolumen 2 sowie das Pneumatikvolumen 3 sind in einem gemeinsamen Gehäuse 4 angeordnet. Innerhalb des Gehäuses 4 ist demnach ein Aufnahmeraum 5 für das Haupthydraulikvolumen 2 sowie ein Aufnahmeraum 6 für das Pneumatikvolumen 3 angeordnet. Der das Haupthydraulikvolumen 2 aufnehmende Aufnahmeraum 5 sowie der das Pneumatikvolumen 3 aufnehmende Aufnahmeraum 6 sind durch eine flexible Trennwand bzw. Membran 7 voneinander getrennt. In den das Haupthydraulikvolumen 2 aufnehmenden Aufnahmeraum 5 ragt eine Kolbenstange 8 hinein. Die Kolbenstange 8 weist am zum Motorraum zeigenden Ende einen Kolben auf. Der Kolben weist ein hier nicht dargestelltes in beiden Richtungen wirksames Drosselventil auf, so dass das Haupthydraulikvolumen 2 in ein oberes und unteres Haupthydraulikvolumen getrennt ist. Alternativ kann das Drosselventil auch extern angeordnet sein und ist mit dem oberen und unteren Haupthydraulikvolumen verbunden. Die Kolbenstange 8 ragt am unteren Ende des Gehäuses 4 aus demselben heraus und weist an seinem aus dem Gehäuse 4 herausragenden freien Ende ein Befestigungselement 9 auf. Gegenüberliegend zu diesem Befestigungselement 9 ist am oberen Ende des Gehäuses 4 ein weiteres Befestigungselement 10 vorgesehen. Über die Befestigungselemente 9 und 10 ist die erfindungsgemäße Feder-Dämpfer-Einrichtung 1 in ein Kraftfahrzeug integrierbar.

Es liegt nun im Sinne der hier vorliegenden Erfindung, dass jede Feder-Dämpfer-Einrichtung 1 über ein dezentrales Ausgleichshydraulikvolumen 11 verfügt. Zur Verdeutlichung der Funktionsweise der erfindungsgemäßen Feder-Dämpfer-Einrichtung 1 ist in Fig. 1 das Ausgleichshydraulikvolumen 11 außerhalb des Gehäuses 4 angeordnet. Es ist jedoch bevorzugt, dass das Ausgleichshydraulikvolumen 11 zusammen mit allen anderen Komponenten, die in Fig. 1 von dem mit der Bezugsziffer 12 gekennzeichneten Kasten 12 umrandet sind, in das Gehäuse 4 der erfindungsgemäßen Feder-Dämpfer-Einrichtung 1 integriert sind.

Vom Ausgleichshydraulikvolumen 11 ist Hydraulikflüssigkeit in das Haupthydraulikvolumen 2 sowie umgekehrt umleitbar. Durch das Umleiten von Hydraulikflüssigkeit zwischen dem Haupthydraulikvolumen 2 und dem Ausgleichshydraulikvolumen 11 ist die Tragkraft der erfindungsgemäßen Feder-Dämpfer-Einrichtung 1 einstellbar. Hierdurch kann eine Höhenänderung bzw. Niveauänderung für ein Kraftfahrzeug, in das eine derartige Feder-Dämpfer-Einrichtung 1 integriert ist, bereitgestellt werden.

Das Ausgleichshydraulikvolumen 11 steht mit dem Haupthydraulikvolumen 2 über Hydraulikleitungen in Verbindung. So ist in eine erste Hydraulikleitung 13 eine ansteuerbare Pumpeneinrichtung 14 und ein Rückschlagventil 15 integriert. Die Ansteuerung der Pumpeneinrichtung 14 erfolgt über einen der Pumpeneinrichtung 14 zugeordneten Pumpenmotor 16. Über die Pumpeneinrichtung 14 ist Hydraulikflüssigkeit von dem Ausgleichshydraulikvolumen 11 in das Haupthydraulikvolumen 2 umleitbar. Das Rückschlagventil 15, welches in Förderrichtung der Hydraulikflüssigkeit hinter der Pumpeneinrichtung 14 in der ersten Hydraulikleitung 13 angeordnet ist, verhindert, dass Hydraulikflüssigkeit vom Haupthydraulikvolumen 2 in das Ausgleichshydraulikvolumen 11 zurückfließen kann. Parallel zu dieser ersten Hydraulikleitung 13 ist eine zweite Hydraulikleitung 17 angeordnet, wobei diese zweite Hydraulikleitung 17 ebenfalls der Verbindung des Ausgleichshydraulikvolumens 11 mit dem Haupthydraulikvolumen 2 dient. In diese zweite Hydraulikleitung 17 ist ein ansteuerbares Ablassventil 18 integriert. Gemäß Fig. 1 verfügt das ansteuerbare Ablassventil 18 über zwei Schaltstufen. In einer ersten Schaltstufe wird die zweite Hydraulikleitung 17 unterbrochen, so dass keine Hydraulikflüssigkeit durch dieselbe fließen kann. In einer zweiten Schaltstufe hingegen wird die zweite Hydraulikleitung 17 und der Fluss von Hydraulikflüssigkeit durch dieselbe freigegeben.

An dieser Stelle sei nochmals darauf hingewiesen, dass das Haupthydraulikvolumen 2, das Pneumatikvolumen 3 sowie das Ausgleichshydraulikvolumen 11 in jeder Feder-Dämpfer-Einrichtung 1 dezentral bereitgestellt werden und vorzugsweise zusammen mit den Hydraulikleitungen sowie in die Hydraulikleitungen integrierten Baugruppen (Pumpeinrichtung 14, Rückschlagventil 15, Motor 16 sowie Ablassventil 18) in das gemeinsame Gehäuse 4 der Feder-Dämpfer-Einrichtung 1 integriert sind. Da das Ausgleichshydraulikvolumen 11 dezentral in jeder Feder-Dämpfer-Einrichtung 1 bereitgestellt wird, sind keine Verbindungen von einzelnen Feder-Dämpfer-Einrichtungen 1 untereinander über Hydraulikleitungen erforderlich. Das weiteren kann auf die Verbindung der Feder-Dämpfer-Einrichtungen 1 mit einem zentralen Hydraulikvolumen verzichtet werden.

Soll nun mit der in Fig. 1 dargestellten Feder-Dämpfer-Einrichtung 1 eine Anhebung eines Kraftfahrzeugs realisiert werden, so wird über die Pumpeneinrichtung 14 Hydraulikflüssigkeit vom Ausgleichshydraulikvolumen 11 in das Haupthydraulikvolumen 2 über die erste Hydraulikleitung 13 gepumpt, wohingegen die zweite Hydraulikleitung 17 unterbrochen ist. Durch die Zufuhr von Hydraulikflüssigkeit vom Ausgleichshydraulikvolumen 11 in das Haupthydraulikvolumen 2 wird der Druck innerhalb des Haupthydraulikvolumens 2 erhöht, wodurch eine höhere Tragkraft für die Feder-Dämpfer-Einrichtung 1 erzielt werden kann. Das Kraftfahrzeug wird hierdurch angehoben. Soll hingegen das Kraftfahrzeug abgesenkt werden, so wird bei ausgeschalteter Pumpeneinrichtung 14 das Ablassventil 18 in die Öffnungsstellung bewegt, so dass durch die zweite Hydraulikleitung 17 Hydraulikflüssigkeit vom Haupthydraulikvolumen 2 in das Ausgleichshydraulikvolumen 11 fließen kann. Hierdurch wird der Druck innerhalb des Haupthydraulikvolumens 2 verringert. Die Tragkraft wird hierdurch reduziert und das Kraftfahrzeug wird abgesenkt.

Es sei darauf hingewiesen, dass die Feder-Dämpfer-Einrichtung 1 sowohl als teiltragendes als auch als volltragendes, hydropneumatische Feder-Dämpfer-Element ausgeführt sein kann. In dem Fall, in dem die Feder-Dämpfer-Einrichtung 1 als volltragendes Element ausgeführt ist, nimmt dieselbe die gesamte Last des Kraftfahrzeugs zusammen mit weiteren gleichartigen Feder-Dämpfer-Einrichtungen 1, die anderen Rädern des Kraftfahrzeugs zugeordnet sein können, auf. Bei einer teiltragenden Feder-Dämpfer-Einrichtung 1 ist zusätzlich zu derselben vorzugsweise an jedem Rad des Kraftfahrzeugs noch ein zusätzliches Federelement vorhanden, welches neben der Feder-Dämpfer-Einrichtung 1 einen zweiten Lastpfad bereitstellt und einen Teil der Last des Kraftfahrzeugs aufnimmt.

Wie ebenfalls Fig. 1 entnommen werden kann, sind das ansteuerbare Ablassventil 18 sowie die ansteuerbare Pumpeneinrichtung 14 bzw. der Motor 16 derselben über Steuerleitungen 19, 20 mit einer Steuer- bzw. Regeleinrichtung 21 verbunden. Die Steuer- bzw. Regeleinrichtung 21 ist als eine zentrale Steuer- bzw. Regeleinrichtung 21 ausgebildet, mit der sämtliche in einem Kraftfahrzeug vorhandene Feder-Dämpfer-Einrichtungen 1 über entsprechende Steuerleitungen verbunden sind. Über diese Steuer- bzw. Regeleinrichtung 21 sind das Ablassventil 18 sowie die Pumpeneinrichtung 14 einer jeden Feder-Dämpfer-Einrichtung 1 zur Gewährleistung einer Höhenänderung bzw. Niveauänderung für das Kraftfahrzeug ansteuerbar.

Fig. 2 zeigt das erfindungsgemäße Niveauregulierungssystem 22. Bei dem erfindungsgemäßen Niveauregulierungssystem 22 ist jedem Rad eines Kraftfahrzeugs eine Feder-Dämpfer-Einrichtung 1 zugeordnet. Bei dem in Fig. 2 dargestellten Blockschaltbild des Niveauregulierungssystems 22 handelt es sich demnach um ein Niveauregulierungssystem für ein zweiachsiges Kraftfahrzeug mit vier Rädern. Die auf der linken Seite der Fig. 2 dargestellten Feder-Dämpfer-Einrichtungen 1 sind den beiden Rädern einer Vorderachse, die auf der rechten Seite dargestellten Feder-Dämpfer-Einrichtungen 1 sind den beiden Rädern einer Hinterachse eines Kraftfahrzeugs zugeordnet. An jedem Rad des Kraftfahrzeugs sind demnach dezentral ein Haupthydraulikvolumen 2, ein Ausgleichshydraulikvolumen 11 sowie ein Pneumatikvolumen 3 vorhanden. Es sind keinerlei Verbindungen der dezentralen Feder-Dämpfer-Einrichtungen 1 einerseits untereinander und andererseits mit einem zentralen Hydraulikvolumen und/oder Pneumatikvolumen erforderlich. Die einzige Verbindung der Feder-Dämpfer-Einrichtungen 1 mit einer zentralen Einrichtung ist die Verbindung derselben über die Steuerleitungen 19 und 20 mit der zentralen Steuer- bzw. Regeleinrichtung 21.

Gemäß Fig. 2 ist jeder Feder-Dämpfer-Einrichtung 1 ein Höhensensor 24 zugeordnet. Der Höhensensor 24 kann entweder in die Feder-Dämpfer-Einrichtung 1 integriert sein oder auch als separate Baugruppe ausgebildet sein. Jeder Höhensensor 24 ist über Steuerleitungen 23 mit der zentralen Steuer- bzw. Regeleinrichtung 21 verbunden. Die Höhensensoren 24 erfassen die aktuelle Höhe bzw. das aktuelle Niveau an jedem Rad des Kraftfahrzeugs und übermitteln als Eingangsgröße für die Steuer- bzw. Regeleinrichtung einen entsprechenden Messwert.

Neben den Höhensensoren 24 ist die Steuer- bzw. Regeleinrichtung 21 mit weiteren Sensoren verbunden, deren Messwerte der Steuer- bzw. Regeleinrichtung 21 als Eingangsgrößen dienen. Bei diesen Sensoren kann es sich zum Beispiel um einen Geschwindigkeitssensor 25, einen Beschleunigungssensor 26 und einen Lenkradwinkelsensor 27 handeln. Die neben den Sensoren 25, 26 und 27 dargestellten Punkte sollen verdeutlichen, dass auch weitere Sensoren der Steuer- bzw. Regeleinrichtung 21 Messwerte als Eingangsgrößen bereitstellen können.

Die Steuer- bzw. Regeleinrichtung 21 bestimmt als Funktion der Messwerte der Höhensensoren 24 und der Sensoren 25, 26 und 27 anhand eines in der Steuer- bzw. Regeleinrichtung 21 abgelegten Regelgesetzes Ausgangsgrößen, die als Stellgrößen für die Feder-Dämpfer-Einrichtungen 1 dienen. Diese Stellgrößen werden den Feder-Dämpfer-Einrichtungen 1 über die Steuerleitungen 19 bzw. 20 zugeführt.

Im Sinne der hier vorliegenden Erfindung wird demnach ein Niveauregulierungssystem 22 vorgeschlagen, welches mehrere dezentrale Feder-Dämpfer-Einrichtungen 1 umfasst. Die dezentralen Feder-Dämpfer-Einrichtungen 1 umfassen dezentral, d.h. jede für sich getrennt, das Haupthydraulikvolumen 2, das Ausgleichshydraulikvolumen 11 sowie das Pneumatikvolumen 3. Eine Vernetzung der Feder-Dämpfer-Einrichtungen 1 erfolgt lediglich über elektrische Steuerleitungen mit einer zentralen Steuer- bzw. Regeleinrichtung 21.

Mithilfe der Erfindung kann demnach ein kostengünstiges Niveauregulierungssystem bereitgestellt werden. Es ist keine Verlegung von Hydraulikleitungen und/oder Pneumatikleitungen zwischen den einzelnen Feder-Dämpfer-Einrichtungen bzw. mit einem zentralen Hydraulikvolumen erforderlich. Demnach lässt das erfindungsgemäße Niveauregulierungssystem platzsparend und kostengünstig in ein Kraftfahrzeug integrieren. Mithilfe des erfindungsgemäßen Niveauregulierungssystems sowie der erfindungsgemäßen Feder-Dämpfer-Einrichtungen lassen sich verschiedene Niveaus für ein Kraftfahrzeug einfach realisieren. So kann abhängig von der Geschwindigkeit des Kraftfahrzeugs zur Reduktion des Kraftstoffverbrauchs das Niveau des Kraftfahrzeugs abgesenkt werden. Beim Parken kann zur Erleichterung des Einsteigens oder Aussteigens ebenfalls das Niveau des Kraftfahrzeugs angepasst werden.

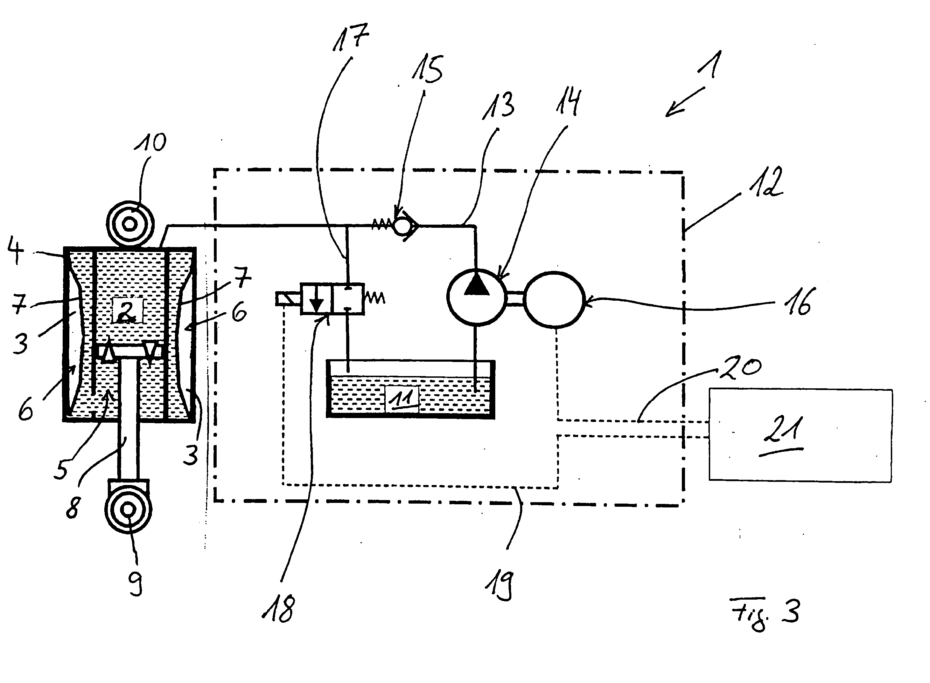

Die Feder-Dämpfer-Einrichtung gemäß der Ausführungsform nach der Figur 3 unterscheidet sich von derjenigen gemäß der Figur 1 dadurch, dass statt, bezogen auf die Längsrichtung der Feder-Dämpfer-Einrichtung, hintereinander angeordneten Haupthydraulikvolumen 2 und Pneumatikvolumen 3, das Pneumatikvolumen 3 konzentrisch zu der Längsachse um das Hydraulikvolumen 2 angeordnet ist. Dieses konzentrische Gaspolster kann teiltragend oder volltragend sein. Grundsätzlich könnte das Gasvolumen auch mit einer kurzen Verbindungsleitung extern als Federkugel oder Federzylinder platziert werden. Mit der Ausführungsform nach der Figur 1 übereinstimmende Bauteile der Ausführungsform nach der Figur 3 sind der Einfachheit halber mit denselben Bezugsziffern bezeichnet.

### Bezugszeichenliste

- Feder-Dämpfer-Einrichtung: 1
- Haupthydraulikvolumen: 2
- Pneumatikvolumen: 3
- Gehäuse: 4
- Aufnahmeraum: 5
- Aufnahmeraum: 6
- Trennwand: 7
- Kolbenstange: 8
- Befestigungselement: 9
- Befestigungselement: 10
- Ausgleichshydraulikvolumen: 11
- Kasten: 12
- Hydraulikleitung: 13
- Pumpeneinrichtung: 14
- Rückschlagventil: 15
- Motor: 16
- Hydraulikleitung: 17
- Ablassventil: 18
- Steuerleitung: 19
- Steuerleitung: 20
- Steuer- bzw. Regeleinrichtung: 21
- Niveauregulierungssystem: 22
- Steuerleitung: 23
- Höhensensor: 24
- Geschwindigkeitssensor: 25
- Beschleunigungssensor: 26
- Lenkradwinkelsensor: 27
- Kolben: 28

## Patentansprüche

1. Niveauregulierungssystem für ein Kraftfahrzeug, mit mehreren hydropneumatischen Feder-Dämpfer-Einrichtungen (1), wobei jede Feder-Dämpfer-Einrichtung (1) dezentral ein Haupthydraulikvolumen (2), ein Ausgleichshydraulikvolumen (11) und ein Pneumatikvolumen (3) aufweist, wobei das Ausgleichshydraulikvolumen (11) einer Feder-Dämpfer-Einrichtung (1) mit dem Haupthydraulikvolumen (2) dieser Feder-Dämpfer-Einrichtung über Hydraulikleitungen in Verbindung steht, wobei vom Ausgleichshydraulikvolumen (11) in das Haupthydraulikvolumen (2) und umgekehrt Hydraulikflüssigkeit zur Bereitstellung einer Höhenänderung bzw. Niveauänderung für das Kraftfahrzeug umleitbar ist, wobei
- in jeder Feder-Dämpfer-Einrichtung (1) eine ansteuerbare Pumpeneinrichtung (14) zur Umleitung von Hydraulikflüssigkeit zusammen mit einem Rückschlagventil (15) in einer ersten Hydraulikleitung (13) und in einer zweiten Hydraulikleitung (17) ein ansteuerbares Ablassventil (18) angeordnet ist und das Haupthydraulikvolumen (2), das Ausgleichshydraulikvolumen (11), das Pneumatikvolumen (3) und die beiden Hydraulikleitungen (13, 17) in ein gemeinsames Gehäuse (4) integriert sind, wobei jedem Rad des Kraftfahrzeugs eine Feder-Dämpfer-Einrichtung ohne Hydraulik- und Pneumatikverbindungen zwischen einzelnen Feder-Dämpfer-Einrichtungen zugeordnet ist, dadurch gehennreichnet, dass die Feder-Dämpfer-Einrichtungen über Steuerleitungen mit einer zentralen Steuer- bzw. Regeleinrichtung (21) verbunden sind, wobei
- jeder Feder-Dämpfer-Einrichtung (1) ein Höhensensor (24) zugeordnet ist, der mit der zentralen Steuer- bzw. Regeleinrichtung (21) über eine Steuerleitung verbunden ist, wobei die Messwerte der Höhensensoren (24) Eingangsgrößen für die Steuer- bzw. Regeleinrichtung (21) sind, und
- mit der zentralen Steuer- bzw. Regeleinrichtung (21) ein Geschwindigkeitssensor (25) und/oder ein Beschleunigungssensor (26) und/oder ein Lenkradwinkelsensor (27) verbunden ist, wobei die Messwerte dieser Sensoren weitere Eingangsgrößen für die Steuer- bzw. Regeleinrichtung (21) sind.

2. Niveauregulierungssystem nach Anspruch 1, **dadurch gekennzeichnet, dass** die Steuer- bzw. Regeleinrichtung (21) abhängig von den Eingangsgrößen Ausgangsgrößen erzeugt, wobei die Ausgangsgrößen Stellsignale für die Feder-Dämpfer-Einrichtungen (1) sind.

## Claims

1. A level-regulating system for a motor vehicle, comprising several hydro-pneumatic spring-damper devices (1), with each spring-damper device (1) comprising a main hydraulic volume (2), a compensating hydraulic volume (11) and a pneumatic volume (3) in a decentralized manner, with the compensating hydraulic volume (11) of a spring-damper device (1) being in connection with the main hydraulic volume (2) of said spring-damper device via hydraulic lines, with hydraulic fluid for providing a change in height or level change for the motor vehicle being re-routable from the compensating hydraulic volume (11) to the main hydraulic volume and vice versa, with
- a triggerable pump device (14) for re-routing hydraulic fluid being arranged in each spring-damper device (1) together with a non-return value (15) in a first hydraulic line (13) and a triggerable drain valve (18) in a second hydraulic line (18), and the main hydraulic volume (2), the compensating hydraulic volume (11), the pneumatic volume (3) and the two hydraulic lines (13, 17) being integrated in a common housing (4), with each wheel of the motor vehicle being associated with a spring-damper device without hydraulic and pneumatic connections between the individual spring-damper devices, **characterized in that** the spring-damper devices are connected via control lines with a central open-loop or closed-loop control device (21), with
- each spring-damper device (1) being associated with a height sensor (24) which is connected to the central open-loop or closed-loop control device (21) via a control line, with the measured values of the height sensors (24) being the input quantities for the open-loop or closed-loop control device (21), and with
- a speed sensor (25) and/or an acceleration sensor (26) and/or a steering-wheel angle sensor (27) being connected to the central open-loop or closed loop control device (21), with the measured values of said sensors being further input quantities for the open-loop or closed-loop control device (21).

2. A level regulating system according to claim 1, **characterized in that** the open-loop or closed loop control device (21) generates output quantities depending on the input quantities, with the output quantities being actuating signals for the spring-damper devices (1).

## Revendications

1. Système de régulation du niveau pour un véhicule à moteur, avec plusieurs dispositifs d'amortisseur à ressorts (1) hydropneumatiques, chaque dispositif d'amortisseur à ressorts hydropneumatique (1) présentant un volume hydraulique principal (2), un volume hydraulique de compensation (11) et un volume pneumatique (3), le volume hydraulique de compensation (11) d'un dispositif d'amortisseur à ressorts (1) communiquant avec le volume hydraulique principal (2) de ce dispositif d'amortisseur à ressorts par des conduites hydrauliques, du liquide hydraulique pouvant être amené du volume hydraulique de compensation (11) au volume hydraulique principal (2) et inversement afin de réaliser un changement de hauteur ou un changement de niveau pour le véhicule à moteur, dans lequel
- il est prévu dans chaque dispositif d'amortisseur à ressorts (1) un dispositif de pompe activable (14) pour dériver du liquide hydraulique avec une soupape antiretour (15) dans une première conduite hydraulique (13) et une soupape d'évacuation activable (18) dans une deuxième conduite hydraulique (17) et le volume hydraulique principal (2), le volume hydraulique de compensation (11), le volume pneumatique (3) et les deux conduites hydrauliques (13, 17) sont intégrés dans un boîtier (4) commun, chaque roue du véhicule à moteur étant associé à un dispositif d'amortisseur à ressorts sans liaisons hydrauliques ou pneumatiques entre les différents dispositifs d'amortisseur à ressorts, **caractérisé en ce que** les dispositifs d'amortisseur à ressorts sont reliés par des lignes de commande à un dispositif central de commande et de régulation (21),
- chaque dispositif d'amortisseur à ressorts (1) étant associé à un capteur de hauteur (24) qui est relié à l'installation centrale de commande et de régulation (21) par une ligne de commande, les valeurs de mesure des capteurs de hauteur (24) étant les grandeurs d'entrée de l'installation de commande et de régulation (21), et
- un capteur de vitesse (25) et/ou un capteur d'accélération (26) et/ou un capteur d'angle du volant de direction (27) étant reliés à l'installation centrale de commande et de régulation (21), les valeurs de mesure de ces capteurs étant d'autres grandeurs d'entrée pour l'installation de commande et de régulation (21).

2. Système de régulation du niveau selon la revendication 1, **caractérisé en ce que** l'installation de commande et de régulation (21) génère des grandeurs de sortie en fonction des grandeurs d'entrée, lesquelles grandeurs de sortie sont des signaux de réglage pour les dispositifs d'amortisseur à ressorts (1).
